(19)

Europäisches
Patentamt
European
Patent Office
Office européen
des brevets

(11) **EP 1 931 724 B1**

(12) **EUROPEAN PATENT SPECIFICATION**

(45) Date of publication and mention
of the grant of the patent:
**13.04.2011 Bulletin 2011/15**

(51) Int Cl.:
**C08K 3/22** (2006.01)     **C08K 5/375** (2006.01)
**C08K 5/541** (2006.01)     **C08K 9/04** (2006.01)
**C09C 1/04** (2006.01)

(21) Application number: **06798507.7**

(22) Date of filing: **03.10.2006**

(86) International application number:
**PCT/JP2006/320157**

(87) International publication number:
**WO 2007/043496 (19.04.2007 Gazette 2007/16)**

(54) **TRANSPARENT POLYMER NANOCOMPOSITES CONTAINING NANOPARTICLES AND METHOD OF MAKING SAME**

NANOPARTIKEL ENTHALTENDE TRANSPARENTE POLYMERNANOKOMPOSITE UND
HERSTELLUNGSVERFAHREN DAFÜR

NANOCOMPOSITES POLYMERIQUES TRANSPARENTS CONTENANT DES NANOPARTICULES
ET LEUR PROCEDE DE FABRICATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **03.10.2005 US 723344 P**
**13.07.2006 US 830483 P**

(43) Date of publication of application:
**18.06.2008 Bulletin 2008/25**

(73) Proprietor: **Kaneka Corporation**
**Osaka-shi, Osaka 530-8288 (JP)**

(72) Inventors:
• **WONG, Minhao**
**Takasago-shi**
**Hyogo 676-8688 (JP)**
• **YAMAGUCHI, Katsumi**
**Takasago-shi**
**Hyogo 676-8688 (JP)**
• **TSUJI, Ryotaro**
**Settsu-shi**
**Osaka 566-0072 (JP)**

(74) Representative: **Vossius & Partner**
**Siebertstrasse 4**
**81675 München (DE)**

(56) References cited:
**WO-A-2005/071002     WO-A2-2004/065362**
**US-A- 5 672 427     US-A1- 2004 007 169**

**US-A1- 2004 209 081**

• HUNG, C.-H.; WHANG, W.-T.: "Effect of surface
stabilization of nanoparticles on luminescent
characteristics in ZnO/poly(hydroxyethyl
methacrylate) nanohybrid films" JOURNAL OF
MATERIALS CHEMISTRY, vol. 15, 16 September
2004 (2004-09-16), pages 267-274, XP002412933
cited in the application
• MA, C.-C. M.; CHEN, Y.-J.; KUAN, H.-C.:
"Polystyrene Nanocomposite Materials:
Preparation, Morphology, and Mechanical,
Electrical, and Thermal Properties" JOURNAL OF
APPLIED POLYMER SCIENCE, vol. 98, 23
September 2005 (2005-09-23), pages 2266-2273,
XP002412934
• DATABASE WPI Week 200218 Derwent
Publications Ltd., London, GB; AN 2002-134393
XP002412937 -& JP 2001 294423 A (NIPPON
SHOKUBAI CO LTD) 23 October 2001
(2001-10-23)
• DATABASE CA [Online] CHEMICAL ABSTRACTS
SERVICE, COLUMBUS, OHIO, US; 5 September
1992 (1992-09-05), YOSHINARI, MAKOTO ET AL:
"Ultrafine powdered metal oxide-containing
polythiophenylene compositions and their
manufacture" XP002412935 retrieved from STN
Database accession no. 1992:491617 -& JP 04
110349 A (NISSAN KAGAKU KOGYO K. K.,
JAPAN) 10 April 1992 (1992-04-10)

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

RELATED APPLICATION

This application claims the benefit of U.S. Provisional Application Serial Nos. 60/723,344, filed October 3, 2005, and 60/830,433, filed July 13. 2006, entitled Transparent Polymer Nanocomposites Containing Nanoparticles and Method of Making Same, and incorporates these applications, in their entirety, by reference.

FIELD OF THE INVENTION

This invention relates to polymer nanocomposites. More particularly, the invention concerns transparent polymeric nanocomposites containing finely dispersed nanocrystalline particles that possess a multitude of characteristics in optical and thermophysical properties.

BACKGROUND OF THE INVENTION

Zinc oxide (ZnO) is a white crystalline, semiconducting material that has found use in many and various applications. It is currently used in cosmetic sunscreens, varistors, and as a white pigment in plastics and inks. It is being considered as a potential material for light emitting diodes, piezoelectric transducers, transparent electronics, transparent conducting oxide (TCO) films and gas sensors. See Pearton et al. "Recent progress in processing and properties of ZnO", Prog. Mater. Sci., Vol. 50, pp 293-340 (2005). The unique combination of properties of ZnO, namely that it is a transparent, UV absorbing, luminescent, piezoelectric, non-toxic and low cost material, makes it technologically important.
ZnO is particularly useful when used in combination with polymers. It is used to improve the UV stability of polymers. Organic UV absorbers such as benzotriazols may bleed out during the service life of the polymeric product. Bleed out degrades surface finish quality and UV stability. Inorganic UV absorbers like ZnO do not bleed out, however. This makes them particularly desirable in polymeric products.
In the form of nanoparticles (particle size less then 100nm), ZnO is known to improve the thermal stability of polyacrylates and polyethylene. See Liufu et al. "Thermal analysis and degradation mechanism of polyacrylate/ZnO nanocomposites", Polym. Degrad. Stab.; Vol. 87, pp 103-110 (2005); Cho et al. "Effects of ZnO Nano Particles on Thermal Stabilization of Polymers", Polym. Eng. Sci., Vol.44, pp 1702-1706 (2004). ZnO nanoparticles also improve the wear resistance of polymers. See Li et al. "The friction and wear characteristics of nanometer ZnO filled polytetrafluoroethylene", Wear, Vol. 249, pp 877-882 (2002). Bulk ZnO has a refractive index around 2.0 and because visible light scattering is significantly reduced when the particle size is smaller than 20nm, ZnO nanoparticles may be used to increase refractive indices of transparent polymers such as poly(methyl methacrylate) (PMMA), polystyrene (PSt), polyvinyl chloride (PVC), polyvinyl butyral (PVB) etc, while maintaining transparency. However, in order to maximize the benefits that ZnO may bring to polymers, fully dispersed polymer nanocomposites must be achieved.
Nanocomposites have been made using nanoparticulate fillers of various types. The Border et al. U.S. Pat. No. 6,586,096 discloses nanocomposite optical articles using magnesium oxide and aluminum oxide nanofillers. However, none of these fillers show the UV absorption and semiconducting characteristics of ZnO. The Arney et al. U.S. Pat. No. 6,432,526 describes nanosized titania highly dispersed in a polymeric matrix. This nanocomposite shows UV absorption, refractive index and semiconducting characteristics comparable to ZnO nanocomposites, however, titania nanoparticles do not provide protection in the UVA band, furthermore, thermal stability of the nanocomposite is not discussed.
Ultraviolet (UV) light is commonly classified into three bands: UVC 200 to 290nm, UVB 290 to 315nm and UVA 315 to 400nm, UVA and UVB are the predominant types of UV light present in sunlight. Polymers and organic materials degrade easily when exposed to UVB and skin tanning, pigmentation and cancer may occur when human skin is exposed to UVA. Although both titania and ZnO are commonly used as UV shielding agents, $TiO_2$ shows a gradual absorption in the UVA region, reaching peak absorption around 330 to 350nm. See Nussbaumer et al. "Synthesis and characterization of surface-modified rutile nanoparticles and transparent polymer composites thereof", J. Nanoparticle Res., Vol. 4, pp 319-323(2002). ZnO is favored in UV shielding over $TiO_2$ due to its sharp absorption curve in the UVA region. Bulk or micron sized-ZnO absorbs UV light below 380nm, when particle size is reduced below 10nm, UV absorption shifts to shorter wavelengths. Thus a method of incorporating ZnO particles of around 10 nm is desirable to provide protection against both UVA and UVB.
Many attempts have been made to disperse ZnO nanoparticles in polymers. One approach in obtaining ZnO polymer nanocomposites is by in-situ formation of ZnO nanoparticles in a polymer matrix. Generally, precursors of zinc oxide are first mixed into the polymer in solution, and then zinc oxide nanoparticles are induced to form using a variety of methods including hydrolysis by alkali or water and oxidation by oxygen plasma. See Abdullah et al. "Generating Blue and Red Luminescence from ZnO/Poly(ethylene glycol) Nanocomposite Prepared Using an In-Situ Method", Adv. Func.

Mater. Vol. 13, pp 800-804 (2003); Jeon et al. "Synthesis of ZnO nanoparticles embedded in a polymeric matrix; effect of curing temperature", Materials Science Forum, Vol. 449-452, Part 2, pp. 1145-1148 (2004); Mulligan et al. "Synthesis and Characterization of ZnO Nanostructures Templated Using Diblock Copolymers", J. Appl. Polym. Sci., Vol. 89, pp 1058-1061 (2003); Yoo et al. "Self-assembled arrays of zinc oxide nanoparticles from monolayer films of diblock copolymer micelles", Chem. Commun., Iss. 24, pp 2850-2851 (2004). Although ZnO polymer nanocomposites can be obtained with good dispersion, the synthesis process often requires complex and multiple steps and the types of polymer that can be used may be limited.

Another approach is by simple blending of ZnO nanoparticles in to the polymer matrix. See Xiong et al. "Preparation and Characterization of Poly(styrene butylacrylate) Latex/Nano-ZnO Nanocomposites", J. Appl. Polym. Sci., Vol. 90, pp 1923-1931 (2003). ZnO contents of 9 percent by weight were produced. However, the nanocomposites shows agglomeration under TEM and light transmission quality was poor.

Transparent and high content ZnO/ PMMA composites have been made by mixing ZnO nanoparticles and PMMA in toluene solution, which was then spin-coated on to a substrate. See Chen et al. "ZnO/PMMA Thin Film nanocomposites for Optical Coatings", Proc. SPIE, Vol.5222, pp 158-162 (2003). The transparent film thus formed can have as much as 20 percent by weight of ZnO, but film thickness is limited to less than 300 nm.

The quality of the nanocomposites can be improved by surface modification of ZnO nanoparticles. Attaching molecules on to the ZnO surface may improve solubility of the oxide nanoparticles in the polymer matrix, thereby ensuring homogeneous dispersion. A simple method has been utilized by Zhou et al. who used commercial dispersant with ZnO nanoparticles and blended by ball milling with water-borne acrylic latex, the resultant nanocomposite did not achieve sufficient homogeneity and transparency as shown in the UV-Vis transmittance spectra. See Zhou et al. "Dispersion and UV-VIS Properties of Nanoparticles in Coatings", J. Dispersion Sci. Tech., Vol. 25, pp. 417-433, 2004. An alternative form of this concept has been utilized whereby ZnO was synthesized in the presence of polymeric surfactants, then purified and blended with PMMA and spin-coated to form a transparent coating. See Khrenov et al. "Surface Functionalized ZnO Particles Designed for the Use in Transparent Nanocomposites", Macromol. Chem. Phys., Vol. 206, pp 95-101 (2005). However the nanoparticles formed showed broad size distributions and irregular shapes and the maximum film thickness was only 2.5 $\mu$m. Moreover, the polymeric surfactant had to be synthesized specially for this purpose, hence adding a level of complexity to the procedure.

Good quality ZnO/poly(hydroxyethyl methacrylate) (PHEMA) nanocomposite films have been made by first modifying the surface of ZnO with 3-(trimethoxysilyl)propyl methacrylate. The modified ZnO nanoparticles were then mixed with HEMA monomers and polymerized to form transparent films. In this method, the original size distribution and shape of ZnO nanoparticles were preserved. However, when the same procedure was applied to PMMA, the quality of the films obtained was less satisfactory. See Hung et al. "Effect of surface stabilization of nanoparticles on luminescent characteristics in ZnO poly(hydroxyethyl methacrylate) nanohybrid films", J. Mater. Chem., Vol. 15, pp 267-274 (2005). In general, it is easier to incorporate ZnO nanoparticles into hydrophilic than hydrophobic polymers. It has been shown by Guo et al. (synthesis and Characterization of Poly(vinylpyrrolidone)-Modified Zinc Oxide Nanoparticles, Chem. Mater., Vol. 12, pp 2268-2274 (2005)), that (polyvinyl pyrrolidone) (PVP) coats ZnO nanoparticles completely to form a shell around them and in the previously mentioned article by Hung et al. ZnO was well dispersed in PHEMA to give a transparent nanocomposite. Both of these examples demonstrate that ZnO has good affinity to hydrophilic polymers. It is thought that the abundance of -OH groups on the ZnO surface greatly increases its affinity to hydrophilic polymer, however this also results in poor affinity to hydrophobic polymers such as PMMA.

A polymeric material, which can overcome all of the limitations referred to above, is still lacking. Inclusion of ZnO nanoparticles in a polymer matrix will impart beneficial properties such as wear resistance, UV blocking, optical transparency, refractive index tuning, thermal stability without any of the flaws associated with the organic additives typically used to achieve the same properties. However, the homogeneous dispersion of nanosized particles of ZnO is required for the beneficial properties to show, and such nanocomposites are still not achievable in the required quality and quantity. Thus there remains a need for producing finely dispersed ZnO nanoparticles in transparent polymers, especially hydrophobic polymers, which is relatively simple and applicable to a wide range of polymer matrices.

SUMMARY OF THE INVENTION

It is an object of this invention to provide a nanocomposite that exhibits high quality transparency and a high content of nanoparticles.

It is another object to provide a polymer nanocomposite, especially of a hydrophobic polymer, which exhibits heretofore unobtained, and exceptional, physical properties.

It is another object to provide a process of dispersing metal oxide or semiconductor or metal nanoparticles in a polymer matrix to obtain nanocomposites.

The foregoing and other objects are realized in accordance with the present invention in a nanocomposite which includes metal oxide particles that do not exhibit substantial diminishing of transparency, and a method of making a nanocomposite article. The nanocomposites exhibit excellent optical properties, including UV absorption, and improved thermal stability.

The present invention is summarized in the appended claims.

The metal oxide particles are zinc oxide particles. The metal oxide particles have a particle size or diameter of preferably less than 20 nm. The nanocomposites exhibit a haze level of less than 5% when measured at a thickness of at least 100 microns. The invention contemplates the use of combinations of metal oxide particles or a mixture of metal oxide, semiconductor or metal particles and a polymer matrix. Capping agents are attached to the particle surface and aid in dispersing the particle in the solvent or polymer matrix.

The invention is also embodied in coated articles having a substrate with at least one layer of transparent coating attached to the surface of the substrate. The substrate, its coating or both may comprise a nanocomposite of the present invention.

The nanocomposites can be prepared by a process which includes a method of dispersing nanoparticles in an organic medium including a step (a) of modifying the nanoparticles with thiol compounds. The thiol compounds are defined in the claims and contain at least a thiol group and aromatic ring. Modifications using these compounds allow the nanoparticles to disperse in nitrogen containing solvents including amine or amide containing solvents such as pyridine, N,N-dimethylformamide, etc. The process also includes the step (b) of preparing a solution of capped nanoparticles from step (a) in nitrogen, containing solvents, such as pyridine, N,N-dimethylformamide, etc, and a step (c) of preparing a solution of polymer in a suitable solvent. + Subsequently, a method of preparing nanoparticle and polymer mixture in step (d) of mixing the solutions prepared in (b) and (c), and step (e) of drying the solution are carried out to form a nanocomposite.

As used herein, with respect to the present invention, the following shall apply.

"Capping" refers to the formation of an ionic or covalent bond of organic molecules to the surface atoms of a nanoparticle, this organic molecule is referred to as a capping agent.

"Capping agent" refers to an organic molecule possessing a functional group capable of binding to the surface atoms of a nanoparticle by ionic or covalent bond.

"Colloid" or "Colloidal solution" refers to a stable dispersion of nanoparticles in a liquid solution.

"Haze" refers to the scattering effect of light in a transparent or partially Transparent material.

"Nanocomposite" refers to a composite material of polymer and particles, where the particle is of various forms and shapes and has at least one dimension smaller than 100 nanometers.

"Nanoparticle" refers to a particle of various forms and shapes and has at least one dimension smaller than 100 nanometers.

"Silane compound" often referred to as silane-coupling agent, contains a hydrolyzable silane group, -Si-Hy, where Hy is a hydrolyzable moiety such as acyloxy, alkoxy, chlorine, etc. The hydrolyzable group can form stable bonds with inorganic atoms such as zinc and titanium, and an organic functional group that increases the affinity to organic media, such as solvents and polymers. The organic functional group may also contain reactive moieties, thereby allowing reactive bonding with organic media.

BRIEF DESCRIPTION OF THE DRAWINGS

FIG 1 is an electron micrograph of a nanocomposite comprising 4 weight percent of ZnO nanoparticles covered with thiol compounds dispersed in poly(methyl methacrylate). The electron micrograph was taken at a magnification of 400,000 times.

FIG 2 is an electron micrograph of a nanocomposite comprising of 1.35 weight percent of ZnO nanoparticles covered with silane compounds dispersed in poly(methyl methacrylate). The electron micrograph was taken at a magnification of 400,000 times.

FIG 3 is a chart depicting the weight loss of phenyltrimethoxysilane capped ZnO against temperature. The remaining solid is found to be 82.7% of the original weight.

FIG 4 is a chart depicting the transmission of light in the visible range and absorption of light in the ultraviolet range of virgin poly(methyl methacrylate) and nanocomposite of thiol-capped ZnO.

FIG 5 is a chart depicting the transmission of light in the visible range and absorption of light in the ultraviolet range of virgin polystyrene and nanocomposite of thiol-capped ZnO.

FIG 6 is a chart depicting the transmission of light in the visible range and absorption of light in the ultraviolet range of virgin poly(methyl methacrylate) and nanocomposite of silane-capped ZnO.

FIG 7 is a chart depicting the weight loss of virgin poly(methyl methacrylate) and nanocomposite of thiol-capped ZnO against temperature.

FIG 8 is a chart depicting the weight loss of virgin polystyrene and nanocomposite of thiol-capped ZnO against temperature.

FIG 9 is a chart depicting the weight loss of virgin poly(methyl methacrylate) and nanocomposite of silane-capped ZnO against temperature.

FIG 10 is a schematic representation of an exemplary nanocomposite article with the coating comprising the nanocomposite material according to one embodiment of the invention.

DETAILED DESCRIPTION OF THE PREFERRED EMBODIMENTS

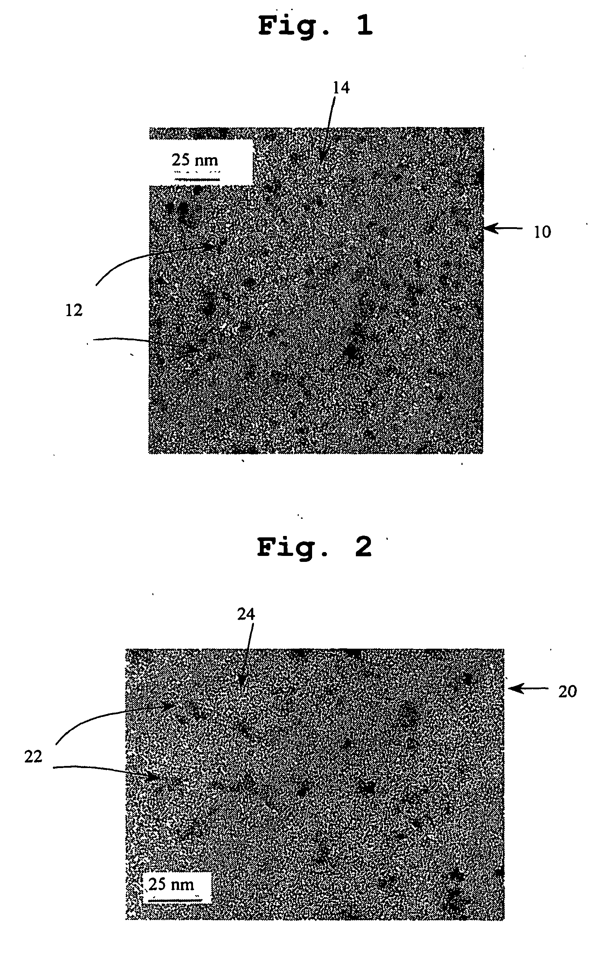

Referring now to the drawings, and particularly to FIGURE 1, which is an electron micrograph, a transparent nanocomposite 10 comprising 4 weight percent of inorganic nanoparticles 12 dispersed in a polymer matrix 14 is shown. The + polymer matrix 14 is selected from the polymer group consisting of transparent polymers, which are chosen from the group of thermoplastics including polyester, polycarbonate, polyolefin, polyamide, polyurethane, polyacetal, polyvinyl acetal, polyvinyl ketal, vinyl polymer or copolymer comprising vinyl monomer selected from (meth)acrylate ester, aromatic vinyl, vinyl cyanide, vinyl halide and vinylidene halide; preferably it is selected from the group consisting of polyalkylene terephthalate, polycarbonate of bisphenol compound, vinyl polymer or copolymer comprising vinyl monomer selected from methyl methacrylate, styrene and acrylonitrile; and more preferably the transparent material should be selected from the group consisting of poly(meth)acrylate, polystyrene and combinations thereof. The nanoparticles 12 comprise zinc oxide or a mixture of inorganic nanoparticles of metal oxides, semiconductors or metals and zinc oxide. The surface of the nanoparticles is covered by thiolic capping agents. The nanoparticles have an average particle diameter preferably in the range of 1 to 20 nm maximum, more preferably 1 to 10 nm and most preferably as low as 1 to 8 nm. Average particle size can be obtained from a transmission electron micrograph as shown in FIGURE 1. The diameters of individual particles in the micrograph are measured and an average value is obtained, this value is regarded as the average particle size.

FIGURE 2, is an electron micrograph showing a transparent nanocomposite 20 comprising 1.35 weight percent of inorganic nanoparticles 22 dispersed in a polymer matrix 24. The polymer matrix 24 is selected from the oolvmer group consisting of transparent polymers, which are chosen from the group consisting of thermoplastics including polyester, polycarbonate, polyolefin, polyamide, polyurethane, polyacetal, polyvinyl acetal, polyvinyl ketal, vinyl polymer or copolymer comprising vinyl monomer selected from (meth)acrylate ester, aromatic vinyl, vinyl cyanide, vinyl halide and vinylidene halide; preferably it is selected from the group consisting of polyalkylene terephthalate, polycarbonate of bisphenol compound, vinyl polymer or copolymer comprising vinyl monomer selected from methyl methacrylate, styrene and acrylonitrile; and more preferably the transparent material should be selected from the group consisting of poly (meth)acrylate, polystyrene and combinations thereof. The nanoparticles 22 comprise zinc oxide or a mixture of inorganic nanoparticles of metal oxides, semiconductors or metal and zinc oxide, The surface of the nanoparticles is covered by silane capping agents (not according to the invention). The capping agents consist of silane compounds with a hydrolyzable functionality to bond with the zinc oxide surface and an organic aromatic functionality to improve affinity between polymer and nanoparticle. The nanoparticles have an average particle diameter preferably in the range of 1 to 20 nm maximum, more preferably 1 to 10 nm and most preferably as low as 1 to 8 nm.

A key feature of the invention is the transparency of the nanocomposite. Transparency can be characterized by the haze value of the nanocomposite. The hase value is defined as the percentage of transmitted light, which, when passing through a specimen, deviates from the incident beam by forward scattering, the total amount of light that deviates from the incident beam is termed the diffuse transmission. Lower haze values imply higher transparency. It is given mathematically as

$$\%\text{Haze} = \frac{T_{\text{diffuse}}}{T_{\text{total}}} \times 100$$

where T = % transmission

For many practical applications, haze values of less than 5% are desirable, preferable the haze value should be less than 4%, more preferably the haze value should be less than 3%, still more preferably less than 2% and most preferably less than 1%. This value can be affected by both the inherent transparency of the material and the surface quality of the object. In order to realize this level of transparency, a few conditions must be satisfied. 1) The nanoparticles incorporated should preferably be less than 20nm in diameter to minimize light scattering, more preferably they should be less than 10nm and most preferably they should be less than 8 nm. 2) A transparent matrix material should be chosen from the group consisting of thermoplastics including polyester, polycarbonate, polyolefin, polyamide, polyurethane, polyacetal, polyvinyl acetal, polyvinyl ketal, vinyl polymer or copolymer comprising vinyl monomer selected from (meth)acrylate ester, aromatic vinyl, vinyl cyanide, vinyl halide and vinylidene halide; preferably it is selected from the group consisting of polyalkylene terephthalate, polycarbonate of bisphenol compound, vinyl polymer or copolymer comprising vinyl monomer selected from methyl methacrylate, styrene and acrylonitrile; and more preferably the transparent material should be selected from the group consisting of poly(meth)acrylate, polystyrene and combinations thereof. 3) The incorporated nanoparticles must be well dispersed with little or no agglomeration. 4) The surface conditions of the nanocomposite object should preferably be sufficiently smooth to reduce light scattering and ensure maximum luminous transmission.

The transparent matrix material should preferably be a hydrophobic polymer or a copolymer derived from hydrophobic and hydrophilic monomers, with the hydrophilic monomer comprising preferably not more than 40 percent weight of the total polymer. Furthermore, the amount of hydrophilic monomer is more preferably not more than 30 percent weight, still more preferably not more than 20 percent weight and most preferably not more than 10 percent weight of the total polymer. The hydrophilic monomer may include functional groups that contribute hydrophilic character such as amido, amino, carboxyl, hydroxyl, pyrrolidinone and ethylene glycol.

A nanocomposite that satisfies the conditions stated above and exhibits a haze level of no more than 5% in the measurement conditions of 100 microns thickness is considered part of the present invention. Furthermore, the haze value may be not more than 4% , preferably less than 3%, more preferably less than 2% and most preferably lower than 1%.

Providing ultraviolet shielding while maintaining high transparency is a salient feature of the present invention. ZnO naturally absorbs ultraviolet light containing energies higher than its bandgap energy. Bulk ZnO absorbs light shorter than 380nm in wavelength. However, ZnO nanoparticles begin absorbing light at wavelengths less than 380nm due to the widening of bandgap energy as particle size becomes smaller, this phenomenon is attributed to the well known quantum size effect. A polymer sample may be characterized by a UV-visible photospectrometer whereby the transmission spectrum can be obtained. A cut-off wavelength may be defined as the wavelength where full absorption of light is observed. However, for samples where full absorption of light does not occur, an effective cut-off wavelength may be defined instead. The effective cut-off wavelength can be found by locating the slope where the curve first begin to drop in transmission intensity, then extending a straight line from the linear portion of this slope of the transmission curve. The cut-off wavelength is read off the point where the line intersects the abscissa. For all practical purposes, the effective cut-off wavelength may be used as the wavelength where UV absorption occurs.

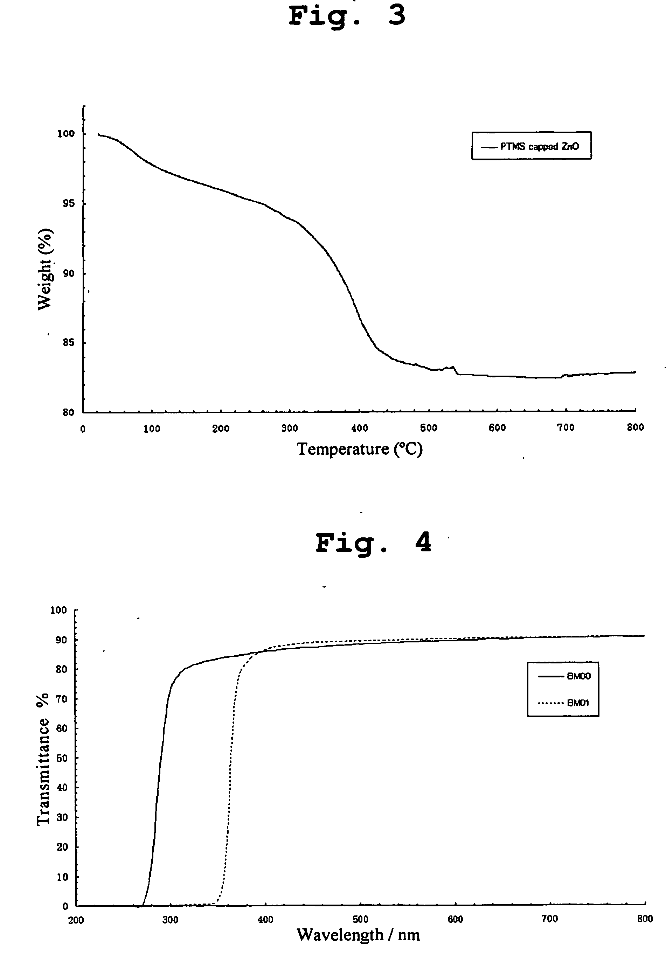

Figure 3 illustrates that phenyltrimethoxysilane (PTMS) capped ZnO exhibits a weight loss when the temperature is increased to 800°C. The weight loss is attributed to absorbed solvent and organic component of silane compound. The metal oxide content can be estimated according to Test Procedure 2, in this case the weight loss is 17.3% and the metal oxide content is 76.4%.

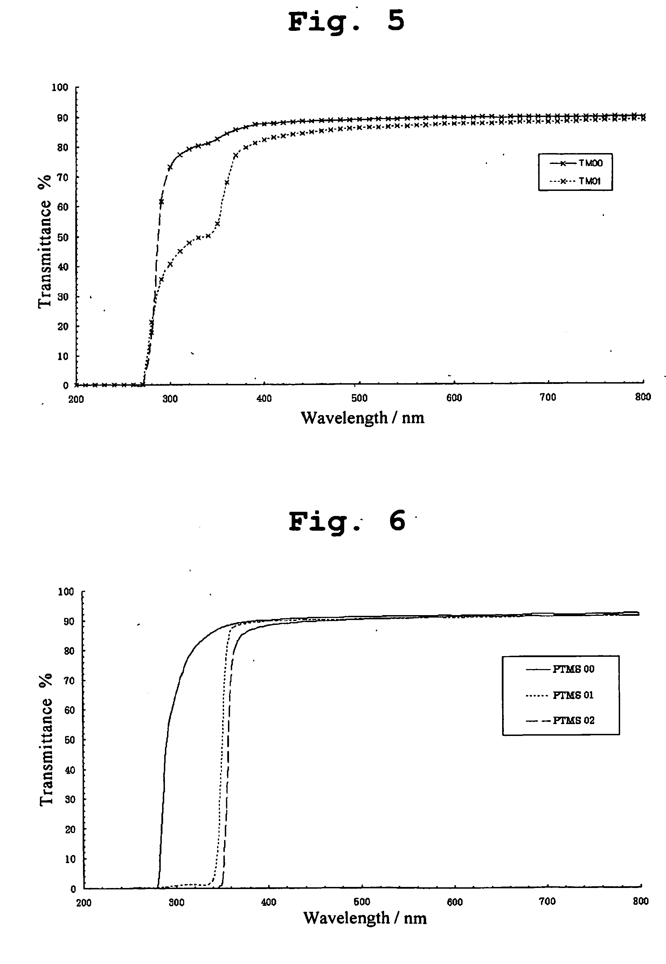

FIGURE 4 illustrates that thiol-capped ZnO/PMMA nanocomposite BM01 absorbs ultraviolet light shorter than 355nm, which is blue-shifted compared to the 380nm of bulk ZnO. BM01 contains 4 weight percent of ZnO nanoparticles of roughly 5nm in average size, which is similar to nanoparticles 12 in nanocomposite 10 shown in FIGURE 1. FIGURE 4 also shows the virgin polymer BM00 which begins absorbing UV light at 270nm. Incorporation of ZnO clearly improves the ultraviolet shielding of virgin polymer and extends UV absorption into the UVA band. Simply incorporating ZnO into a polymer matrix is not enough, however. FIGURE 5 illustrates that thiol-capped ZnO/PSt nanocomposite TM01 partially absorbs UV light shorter than 325nm, compared to virgin polymer TM00 which absorbs UV light shorter than 270nm. In this case, TM01 also contains 4 weight percent of ZnO nanoparticles of roughly 5 nm in average size. UV shielding of TM01 is markedly poor compared to BM01 due to the thickness of the film, which is 0.020 mm, compared to 0.110 mm of BM01. Thin polymer films may not absorb all UV light due to an insufficient amount of ZnO nanoparticles. Consequently, to improve UV shielding, either film thickness or ZnO amount must be increased. In practice, one of the two methods will be preferred according to practical constraints.

FIGURE 6 illustrates that silane-capped ZnO/PMMA nanocomposites PTMS01 and PTMS02 absorb/ultraviolet light shorter than 340nm and 350nm, K respectively, which is blue-shifted compared to the 380nm of bulk ZnO. The zinc oxide contents of PTMS01 and PTMS02 are 1.35 and 6.31 weight percent, respectively, of which the ZnO nanoparticles are roughly 5nm in average size, which is similar to nanoparticles 22 in nanocomposite 20 shown in FIGURE 2. FIGURE 6 also shows the virgin polymer PTMS00 which begins absorbing UV light at 280nm. Incorporation of ZnO clearly improves the ultraviolet shielding of virgin polymer and extends UV absorption into the UVA band.

The present invention does not impose conditions on the amount of ZnO incorporated or the level of UV absorption, as such it covers any polymer nanocomposite that incorporates ZnO particles showing UV absorption below 380 nm, preferably less than 370 nm, more preferably less than 360 nm, still more preferably less than 355 nm and most preferably less than 350 nm, while maintaining transparency with a haze level lower than 5% at a thickness of 0.100 mm.

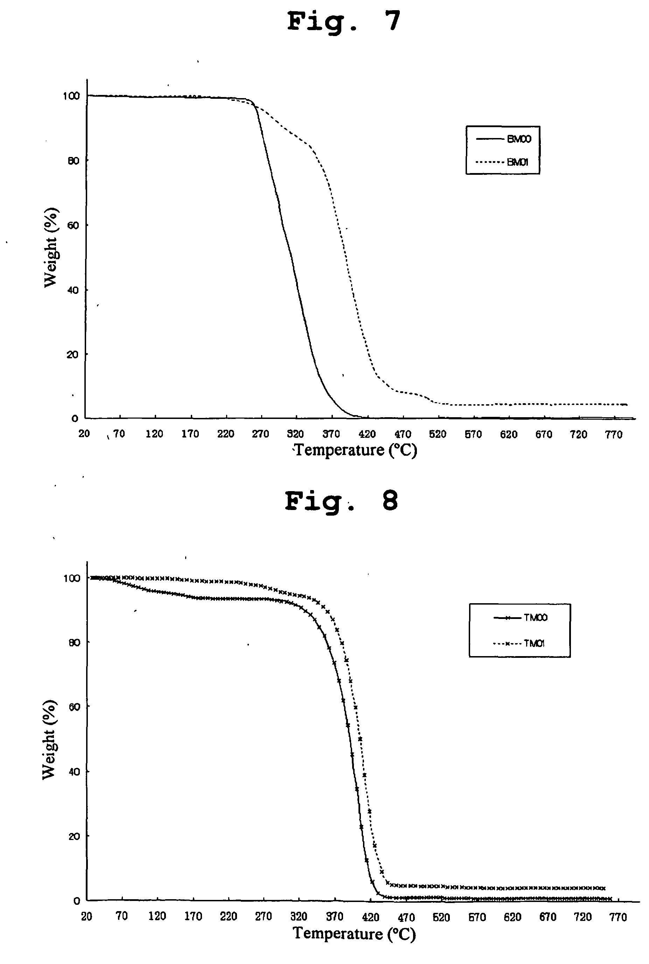

Nanocomposites of the present invention show a marked improvement in thermal stability over virgin polymers. FIGURE 7 illustrates the weight loss of thiol-capped ZnO nanocomposites as a function of temperature. Thiol-capped ZnO/PMMA nanocomposite BM01 shows an improvement in thermal stability of 78°C over virgin polymer BM00. Similarly, FIGURE 8 illustrates that thiol-capped ZnO/PSt nanocomposite TM01 shows an improvement in thermal stability of 14°C over-virgin PSt polymer TM00.

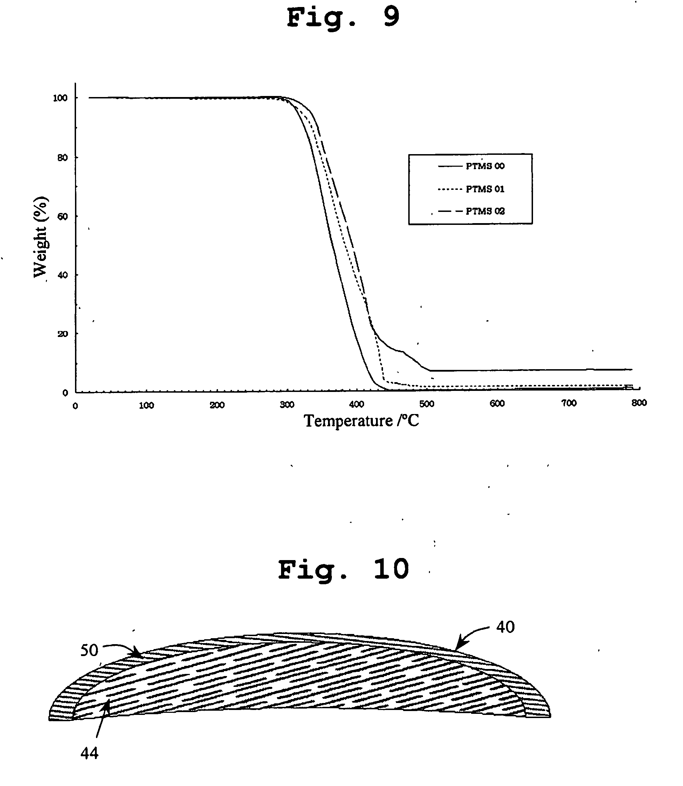

FIGURE 9 illustrates the weight loss of silane-capped ZnO nanocomposite as a function of temperature. Silane-capped ZnO/PMMA nanocomposites PTMS01 and PTMS02 show an improvement in thermal stability of 17°C and 27°C, respectively, over virgin polymer PTMS00. A nanocomposite is considered part of the present invention if the temperature to reduce the nanocomposite to 50% of its original weight, measured at 25°C, is increased by at least 10°C, compared to the same virgin polymer without ZnO nanoparticles included.

The nanocomposite of the current invention may be formed into articles having different shapes and forms. The nanocomposite of the current invention may also be in the form of a coated article, where the surface coating or film is composed of the nanocomposite and the underlying substrate may or may not be composed of the nanocomposite. FIGURE 10 illustrates a coated article 40 comprising a substrate 44 with at least one layer of transparent coating 50 attached to the surface of the substrate. The substrate 44, the coating 50 or both comprise nanocomposites of the present invention including inorganic nanoparticles dispersed in a polymer matrix. The nanocomposite comprises nanoparticles of zinc oxide, the nanoparticles being covered by a capping agent. A transparent polymer matrix material is chosen from the group consisting of thermoplastics including polyester, polycarbonate, polyolefin, polyamide, polyurethane, polyacetal, polyvinyl acetal, polyvinyl ketal, vinyl polymer or copolymer comprising vinyl monomer selected from (meth)acrylate ester, aromatic vinyl, vinyl cyanide, vinyl halide and vinylidene halide; preferably it is selected from the group consisting polyalkylene terephthalate, polycarbonate of. bisphenol compound, vinyl polymer or copolymer comprising vinyl monomer selected from methyl methacrylate, styrene and acrylonitrile: and more preferably the transparent material should be selected from the group consisting of poly(meth)acrylate, polystyrene and combinations thereof. The coated article of the current invention may be in any shape or form.

Once again, the haze level of the nanocomposite is no more than 5%. UV absorption of the nanocomposite begins at a wavelength of 380nm or shorter. Thermal stability, wherein the temperature to reduce to 50% of the original weight is increased by at least 10°C compared to the polymer without said nanoparticles, is achieved.

The invention is also embodied in a method for making a nanocomposite, comprising inorganic nanoparticles dispersed in an organic medium, where the organic medium comprises organic solvents, monomer and polymer. Further nanoparticles useful in the current invention can be of the metal semiconductor or metal oxide type, which are selected from the group consisting of aluminium, cadmium, cerium, chromium, cobalt, copper, gallium, germanium, gold, indium, iron, iridium, lead, mercury, nickel, platinum, palladium, silicon, silver, tin, zinc, zirconium, aluminum arsenide, aluminum nitride, aluminum phosphide, cadmium selenide, cadmium sulfide, cadmium telluride, gallium arsenide, gallium nitride, gallium phosphide, gallium selenide, gallium sulfide, indium arsenide, indium phosphide, indium nitride, indium selenide, indium sulfide, indium telluride, lead selenide, lead sulfide, lead telluride, mercury selenide, mercury sulfide, mercury telluride, zinc selenide, zinc sulfide, zinc telluride, aluminum oxide, cadmium oxide, cerium oxide, chromium oxide, cobalt oxide, indium oxide, indium tin oxide, iron oxide, lead oxide, nickel oxide, silicon dioxide, tin oxide, titanium oxide, zinc oxide and zirconium oxide. Particularly useful are metal oxide nanoparticles.

Metal oxide nanoparticles can be synthesized by the forced hydrolysis of metal salts in alcoholic solution. A variety of articles are available in the literature describing such methods, some examples can be found in the articles by Koch et al. (Chem. Phys. Lett., 122(5), pp 507-510 (1985)), Bahnemann et al. Phys. Chem., 91, pp 3789-3798, (1987)) and Spanhel et al. (J. Am. Chem. Soc., 113, pp 2826-2833, (1991)). In the present invention, the method of Bahnemann et al.(J. Phys. Chem., 91, pp 3789-3798, (1987)) and of Li et al as disclosed in US patent X publication no. US2005/260122 will be used with modifications to synthesize zinc oxide nanoparticles less than 10 nm in size. In the modified method of Bahnemann et al. zinc acetate dihydrate was dissolved in alcoholic solvent, after* which an alcoholic solution of sodium hydroxide was added to the zinc acetate solution. The mixture was placed in a water bath that was preheated to 60°C for 2 hours. The reaction solution was then concentrated by rotary evaporation to give 0.04 M ZnO colloidal solution. In the modified method of Li et al. zinc acetate dihydrate was dissolved in alcoholic solvent. An alcoholic solution of potassium hydroxide was also prepared. The zinc acetate dihydrate solution was rapidly poured into the alcoholic solution of potassium hydroxide while stirring. The reaction was allowed to continue for 2 hours after which the solution was cooled to 0 ~5°C to halt further nanocrystal growth. The solution thus prepared gives 1 L of 0.04 M ZnO colloidal solution. Although the example of ZnO nanoparticles dispersed in alcoholic solution is given, it should be understood that the present invention also includes ZnO nanoparticles dispersed in nonalcoholic solvents.

Some surface modification is required for nanoparticles to disperse well in organic media, in particular polymers. Examples of surface modifiers that can serve as good capping agents are thiols that possess an aromatic functionality (according to the invention) and silanes that possess an aromatic functionality and a hydrolyzable functionality (not according to the invention). A good candidate is benzyl mercaptan, which consists of a thiol functionality and an aromatic functionality. Benzyl mercaptan acts as a capping agent which caps or attaches to the surface of nanoparticles via the thiol functionality, whereas the aromatic functionality increases affinity between solvent and nanoparticle. Another good candidate is phenyltrimethoxysilane, which consists of a hydrolyzable alkoxysilane functionality and an aromatic functionality. Phenyltrimethoxysilane acts as a capping agent which caps or attaches to the surface of nanoparticles via the -Si-O- metal linkage, similarly, the aromatic functionality increases affinity between solvent and nanoparticle. A second role of the aromatic functionality is to improve affinity between polymer and nanoparticle. Two possible ways for improving solubility between inorganic particle and organic species are to ensure that hydrogen bonding abilities and the solubility parameters are alike. Native zinc oxide nanoparticles are highly polar due to the presence of OH groups on the surface, attaching the surface less polar molecules to the surface will bring solubility parameters closer to those of organic solvents while shielding the -OH group from interacting with solvents of less hydrogen bonding abilities. The use of benzyl mercaptan, phenyltrimethoxysilane and other related molecules allows ZnO to be dissolved in nitrogen-containing solvents, including amine or amide containing solvents and in particular, N,N-dimethyl*formamide and pyridine. One or more types of capping agents may be used in combination to achieve the desired solubility in solvents and compatibility with polymeric matrices.

Benzyl mercaptan is prepared as a solution with 2-propanol, which is then added directly into the ZnO/2-propanol colloidal solution while stirring. The amount of benzyl mercaptan added is calculated to be in the range of 0.5 to 1.5 molar equivalents to zinc oxide in solution. The amount of zinc oxide is estimated by assuming 100 percent conversion from zinc acetate. Precipitation occurs immediately and the solution is allowed to settle. The precipitate is separated by centrifugation and washed at least twice by methanol by redispersing as a suspension in methanol and centrifuging the suspension to collect the precipitate, followed by drying of the wet precipitate in a vacuum oven at room temperature for at least 2 hours. This dried powder form of ZnO capped with benzyl mercaptan can be dispersed in nitrogen-containing solvents, including amine or amide containing solvents and in particular, N,N-dimethylformamide and pyridine, heating and mild agitation may be required in some cases and insoluble parts may also be observed, in which case the insoluble parts shall be removed from the solution by filtration or centrifugation.

The thiolic capping agent selected is not restricted to benzyl mercaptan and may be selected from the group consisting of thiol compounds having an aromatic group of the structure $HS-R_1-AR-R_2$ or $HS-AR-R_2$, whereby $R_1$ is selected from the group consisting of cycloalkylene, cycloalkenylene, a branched or unbranched alkylene, a branched or unbranched alkenylene, a branched or unbranched alkynylene, a branched or unbranched heteroalkylene, a branched or unbranched heteroalkenylene, a branched or unbranched heteroalkynylene, preferably a X branched or unbranched $C_{1-4}$alkylene; and $R_2$ is selected from the group X consisting of sulfonate, phosphonate, halogen, hydrogen, epoxy, allyl, amine, amide, aryl, heteroaryl, cycloalkyl, cycloalkenyl, heterocycloalkyl ester, a branched or unbranched alkyl, a branched or unbranched alkenyl, a branched or unbranched alkynyl, a branched or unbranched heteroalkyl, a branched or unbranched heteroalkenyl, a branched or unbranched heteroalkynyl preferably a branched or unbranched $C_{1-4}$ alkyl; and AR is an aromatic group selected from the group consisting of arylene (preferably phenylene), cycloarylene, heteroarylene or heterocycloarylene. The selection of $R_1$ and $R_2$ is decided by the type of polymer matrix, for example, long alkyl chains or bulky side groups may be introduced to match the hydrophobicity of the polymer matrix. Reactive functional groups may also be added, for example vinyl groups, which may react with unsaturated bonds and thiol groups in the polymer. Other functional groups such as amines and epoxies may be selected to allow reaction with resins containing epoxide functionalities.

The nanoparticles may be surface treated with one or more types of silane compound(s) (not according to the invention). The silane compound(s) have the structure $X_n Y_{(3-n)}Si-(CH_2)_m-R$, whereby X is a hydrolyzable functional group including acryloxy, acyloxy, alkoxy, alkoxyalkoxy, amine, epoxy, halogen, methacryloxy, oxime or phenoxy, preferably $C_{1-4}$alkoxy; Y is any non-hydrolyzable functional group such as $-CH_3$, $-H$, or $-OSi$; the number n can be 1, 2 or 3; and m is an integer ranging from 0 to 18; R is an organic group having a functionality selected from the group consisting of cycloalkyl, cycloalkenyl, branched or unbranched alkyl, a branched or unbranched alkenyl, a branched or unbranched alkynyl, a branched or unbranched heteroalkyl, a branched or unbranched heteroalkenyl, a branched or unbranched heteroalkynyl, acid anhydride, acyloxy, alkoxy, allyl, amino, amido, carbamate, cyano, epoxy, epoxy cycloalkyl, ester, glycidoxy, halogen, halogenated alkyl, hydrogen, hydroxyl, mercapto, methacryloyl, phenyl, phosphonate, sulfonate, sulfonyl, ureido, vinyl, and combinations thereof.

It was found that silane compounds containing aromatic rings are particularly compatible with vinyl polymers such as polymethyl(meth)acrylate and polystyrene. An example of such a compound is phenyltrimethoxysilane. The preferable type of capping agent(s) may be selected from the group consisting of silane compounds having an aromatic group of the structure $X'_nY'_{(3-n)}Si-R_3-AR'-R_4$ or $X'_nY'_{(3-n)}Si—AR'—R_4$, whereby X' is a hydrolyzable functional group including acryloxy, acyloxy, alkoxy, alkoxyalkoxy, amine, epoxy, halogen, methacryloxy, oxime or phenoxy, preferably $C_{1-4}$ alkoxy; Y' is any non-hydrolyzable functional group such as $-CH_3$, $-H$, or $-OSi$; the number n can be 1, 2 or 3; $R_3$ is selected from the group consisting of cycloalkylene, cycloalkenylene, a branched or unbranched alkylene, a branched or unbranched alkenylene, a branched or unbranched alkynylene, a branched or unbranched heteroalkylene, a branched or unbranched heteroalkenylene, a branched or unbranched heteroalkynylene, preferably a branched or unbranched $C_{1-4}$ alkylene; $R_4$ is an organic group having a functionality selected from the group consisting of cycloalkyl, cycloalkenyl, a branched or unbranched alkyl, a branched or unbranched alkenyl, a branched or unbranched alkynyl, a branched or unbranched heteroalkyl, a branched or unbranched heteroalkenyl, a branched or unbranched heteroalkynyl both $R_3$ and $R_4$ may also be selected from the group consisting of acid anhydride, acyloxy, alkoxy, allyl, amino, amido, carbamate, cyano, epoxy, epoxy cycloalkyl, ester, glycidoxy, halogen, halogenated alkyl, hydrogen, hydroxyl, mercapto, phosphonate, sulfonate, sulfonyl, ureido and combinations thereof; and AR' is an aromatic group selected from the group consisting of arylene (preferably phenylene), cycloarylene, heteroarylene or heterocycloarylene, including pyridine, pyrrole, thiophene, etc.

If multiple functional groups of X, Y, X' or Y' exist in the same molecule, they may have the same or different structure, for example in the case where two moieties of X exist, X may consist of two methoxy moieties or one methoxy moiety and one ethoxy moiety.

The selection of functional groups R, $R_3$ and $R_4$ is decided by the type of polymer matrix, for example, long alkyl chains or bulky side groups may be introduced to match the hydrophobicity of the polymer matrix. Reactive functional groups may also be added, for example vinyl groups, which may react with unsaturated bonds and thiol groups in the polymer. Other functional groups such as amines and epoxy may be selected to allow reaction with resins containing epoxide functionalities. The aboveinentioned silane compounds may be used in combination with other types of silane or non-silane capping agents to achieve the desired solubility in solvents and compatibility in polymer matrices.

Phenyltrimethoxysilane is prepared as a solution with methanol, which is then added directly into the ZnO/ methanol colloidal solution while stirring. The amount of phenyltrimethoxysilane added is calculated to be in the range of 0.01 to 1.5 molar equivalents to zinc oxide in solution. The amount of zinc oxide is estimated by assuming 100 percent conversion from zinc acetate. Precipitation due to flocculation of nanoparticles may occur after concentration by solvent evaporation, and flocculation is further induced by pouring into a mixture of 2-propanol and hexane, at which precipitation occurs immediately and the solution is allowed to settle. The precipitate is separated by centrifugation and washed at least twice by methanol by redispersing as a suspension in methanol and centrifuging the suspension to collect the precipitate, followed by drying of the wet precipitate in a vacuum oven at room temperature for at least 2 hours. This dried powder form of ZnO capped with phenyltrimethoxysilane can be dispersed into nirogen-containing solvents, including amines or amides, and in particular, N,N-dimethylformamide and pyridine. Heating and mild agitation may be required in some cases and insoluble parts may also be observed, in which case the insoluble parts shall be removed from the solution by filtration or centrifugation.

The solution of nanoparticles is added to a solution of polymer and mixed to obtain a homogeneous dispersion. Alternatively, the polymer can be added directly into the nanoparticle solution. The polymer is selected from the group consisting of transparent polymers of selected from the group consisting of polyester, polycarbonate, polyolefin, polyamide, polyurethane, polyacetal, cellulose derivatives, polyvinyl acetal, polyvinyl ketal, vinyl polymer or copolymer comprising vinyl monomer selected from (meth)acrylate ester, aromatic vinyl, vinyl cyanide, vinyl halide, vinylidene halide, vinyl alcohol and derivatives, vinyl pyrrolidone and combinations thereof.

The nanoparticle and polymer solution mixture is poured into a mold and dried under vacuum to obtain a clear and transparent polymer nanocomposite.

## EXAMPLE 1

### PREPARATION OF ZnO/PMMA NANOCOMPOSITES

### Preparation of particles

Solvents and reagents used in this and subsequent examples were of reagent grade and were used without further purification. ZnO nanoparticle alcoholic solutions produced by a variety of methods available in the literature may be employed in the production of nanoparticles having a diameter of less than 10nm. In this example, the method of Bahnemann et al. (J. Phys. Chem., 91:3789, (1987)) will be used with modifications. Briefly, 0.439 g (2 mmol) of zinc acetate dihydrate (98%) was dissolved in 160 mL of 2-propanol under stirring at 50°C, after which the solution was further diluted to 1840 mL. 0.16 g (4 mmol) of sodium hydroxide pellets (99.99%) were dissolved in 160 mL of 2-propanol at 50°C, this solution was added to the zinc acetate solution at 0°C under stirring. The mixture was placed in a water bath that was preheated to 60°C for 2 hours. The reaction solution was then concentrated by a rotary evaporator at 30-3 5°C to 50ml to give 0.04 M ZnO colloid solution.

### Preparation of capping solution and capped ZnO

0.248 g (2 mmoles) of benzyl mercaptan (BM) (99%) was added to 10ml of isopropanol. The BM solution was rapidly added to the reaction solution while stirring. The ZnO nanocrystals were capped by BM and the flocculation of nanocrystals resulted in formation of slight yellow or white precipitates. The precipitate was allowed to settle and then separated from the solution phase by centrifugation. The precipitate collected was redispersed in methanol to form a turbid suspension and centrifuged. This purification procedure was repeated once more. The purified precipitate was dried in a vacuum oven at room temperature for 2 hours to obtain a slightly yellow fine powder. This powder was analyzed by TGA to estimate the percentage of ZnO present. Typically a range of to 65 weight percent of ZnO can be obtained.

This value is obtained according to Test Procedure 1.

**Preparation of ZnO/PMMA nanocomposites**

To prepare a 4 weight percent ZnO nanocomposite, assuming 50% weight of benzyl mercaptan (BM)-capped ZnO was ZnO, BM-capped ZnO powder (0.08g) was dissolved in 10 ml of pyridine. Heating the nanoparticle solution at 60°C for 30 minutes will result in an optically clear solution. PMMA (0.92g) was dissolved in 30ml of chloroform to form a clear, transparent solution. The nanoparticle solution was mixed thoroughly with the PMMA solution while maintaining an optically clear solution with a concentration of 1 g of capped ZnO and PMMA in 40ml solution. This solution was then concentrated to a volume of 10ml at room temperature using a rotary evaporator. The concentrated solution was poured into a glass mold to form a film. The mold was then placed in a vacuum oven to be dried for 2 hours at room temperature. A clear, transparent film was obtained that was easily separated from the mold. Thermogravimetic analysis (TGA) according to Test Procedure 1 confirmed the residue weight of the nanocomposites to be 4%.

**EXAMPLE 2** (reference example)

**PREPARATION OF ZnO/PSt NANOCOMPOSITES**

**Preparation of Particles**

The same procedure as described in Example 1 was followed.

**Preparation of capping solution and capped ZnO**

The same procedure as described in Example 1 was followed except that p-(trimethylsilyl)phenylmethanethiol (TMSPMT) from Wako Chemicals was used instead of BM.
A solution of 0.393 g (2 mmole) of TMSPMT in methanol (10ml) was prepared. The TMSPMT solution was rapidly added to the reaction solution while stirring. The ZnO nanocrystals were capped by TMSPMT and the flocculation of nanocrystals resulted in the formation of slightly yellow or white precipitates. The precipitate was allowed to settle and then separated from the solution phase by centrifugation. The precipitate collected was redispersed in methanol to form a turbid suspension and was centrifuged. This purification procedure was repeated once more. The purified precipitate was dried in a vacuum oven at room temperature for 2 hours to obtain a slightly yellow fine powder. This powder was analyzed by TGA to estimate the percentage of ZnO present. Typically a range of 50 to 70 weight percent of ZnO can be obtained. This value was obtained according to Test Procedure 1.

**Preparation of ZnO/PSt nanocomposites**

To prepare a 4 weight percent ZnO nanocomposite, assuming 50% weight of TMSPMT-capped ZnO was ZnO, TMSPMT-capped ZnO powder (0.08g) was dissolved in 10ml of pyridine. Heating the nanoparticle solution at 60°C for 30 minutes will result in an optically clear solution. PSt (0.92g) was dissolved in 30ml of chloroform to form a clear, transparent solution. The nanoparticle solution was mixed thoroughly with the PSt solution while maintaining an optically clear solution with a concentration of 1g capped ZnO and PSt in 40ml solution. This solution was then concentrated to a volume of 10ml at room temperature using a rotary evaporator. The concentrated solution was poured into an open mold to form a film. The mold was then placed in a vacuum oven to be dried for 2 hours at room temperature. A clear, transparent film was obtained that was easily separated from the mold. Thermogravimetic analysis according to Test Procedure 1 confirmed the residue weight of the nanocomposites to be 4%.

**EXAMPLE 3** (reference example)

**PREPARATION OF ZnO/PMMA NANOCOMPOSITES**

**Preparation of particles**

In this example, the method of Li et al. as disclosed in US patent publication no. US2005/0260122 will be used with modifications. Briefly, 8.78g (0.04 moles) of zinc acetate dihydrate (98%) was dissolved in 200 mL of methanol under stirring at 60°C, after which the solution was allowed to cool to 25°C. An alkali solution was prepared using 4.489 g (0.08) moles of potassium hydroxide pellets (85%), which were dissolved in 800 mL of methanol under stirring and the temperature was maintained at 60°C. The zinc acetate dihydrate solution was rapidly poured into the alkali solution while stirring. Solution turbidity may be observed which eventually clears up within an hour to give a transparent solution. The reaction was allowed to continue for 2 hours after which the solution was cooled to 0~5°C to halt further nanocrystal growth. The solution thus prepared gives 1 L of 0.04 M ZnO colloidal solution.

**Preparation of capping solution and capped ZnO**

7.932 g (0.04) moles of phenyltrimethoxysilane (PTMS) (94%) was added to 20ml of methanol. The PTMS solution was rapidly added to the reaction solution while stirring. The ZnO nanocrystals were capped by PTMS and some flocculation of nanocrystals may result in the formation of white precipitates. The solution was concentrated by evaporation to 500 mL at 40°C. Some precipitation may be observed after concentration. A homogeneous mixture of 500 mL of 2-propanol and 2.5 L of hexane was prepared. The concentrated ZnO colloid was rapidly poured into the 2-propanol and hexane mixture while stirring. Flocculation of the nanocrystals occurred and the mixture was allowed to settle for 1 to 3 hours. The flocculated nanocrystals in the form of white precipitate was separated from the solution phase by centrifugation at 6000 rpm for 20 min. The precipitate collected was added to methanol to form a turbid suspension and centrifuged. This purification procedure was repeated once more. The purified precipitate was dried in a vacuum oven at room temperature for 2 hours to obtain a white powder. This powder was analyzed by TGA to estimate the percentage of ZnO present. Typically a range of 60 to 85 weight percent of solid residue can be obtained. This value is then converted to ZnO weight percentage obtained according to Test Procedure 2. A TGA graph from a typical preparation of nanoparticles is shown in Figure 3: The weight loss is attributed to absorbed solvent and organic component of the silane compound. The metal oxide content can be estimated according to Test Procedure 2, in this case the weight loss is 17.3% and the metal oxide content is 76.4%.

**Preparation of ZnO/PMMA nanocomposites**

To prepare a 1.35 weight percent ZnO nanocomposite, where 76.4% weight of phenyltrimethoxysilane (PTMS)-capped ZnO was ZnO, PTMS-capped ZnO powder (0.0176g) was dissolved in 0.3344 g of DMF to make a 5% solution. The nanoparticle solution was sonicated for 30 minutes resulting in an optically clear solution. PMMA (0.9824g) was dissolved in 8.842g of DMF to make a 10 % solution. The polymer solution was heated to 80°C and stirred for at least 1 hour to ensure homogeneous mixing. The nanoparticle solution was mixed thoroughly with the PMMA solution while maintaining an optically clear solution. The nanoparticle/polymer solution was poured into a glass mold to form a film. The mold was then placed in a vacuum oven to be dried for 5 hours at room temperature. A clear, transparent film was obtained that was easily separated from the mold. Thermogravimetic analysis according to Test Procedure 2 confirmed the residue weight of the nanocomposites to be 1.45%, which can be converted to obtain a ZnO weight of 1.35%. This sample was designated as PTMS01. To prepare another sample of 6.31 weight percent ZnO nanocomposite, a similar procedure as before was followed where PTMS-capped ZnO powder (0.0822g) was dissolved in 1.5618 g of DMF to make a 5% solution. PMMA (0.9178g) was dissolved in 8.260g of DMF to make a 10% solution Thermogravimetic analysis according to Test Procedure 2 confirmed the residue weight of the nanocomposites to be 6.83%, which can be converted to obtain a ZnO weight of 6.31%. This sample was designated as PTMS02.

**Test Procedure 1: Determination of the Weight Percentage of Metal Oxide Content of Thiol-capped Particles and Thermal Stability of Nanocomposites.**

The metal oxide contents of the particles and nanocomposites were determined using a Shimadzu TGA-50 Thermal Gravimetric Analyzer. For the particles prepared according to Examples 1 and 2, a sample was heated to 800°C at a rate of 20°C per minute in air flowing at 50 cubic centimeters per minute and held isothermally for 10 minutes. The weight percentage of remaining solid was attributed to metal oxide with all volatile organic components removed. For the nanocomposites prepared according to Examples 1 and 2, a sample was heated to 120°C for 2 hours in an oven to drive off residual solvent This sample was then heated to 800°C at a rate of 20°C per minute in the Thermal Gravimeter Analyzer in air flowing at 50 cubic centimeters per minute and held isothermally for 10 minutes. $t_{50}$, defined as the temperature corresponding to fifty percent weight X remaining of the sample, taking the weight measured at 25°C as a reference, was recorded for the purpose of determination of thermal stability. The weight percentage of remaining solid was attributed to metal oxide with all polymeric and volatile organic components removed.

**Test Procedure 2: Determination of The Weight Percentage of Metal Oxide Content of Silane-capped Particles and The Thermal Stability of Nanocomposites.**

The metal oxide contents of the particles and nanocomposites were determined using a Shimadzu TGA-50 Thermal Gravimetric Analyzer. For the particles prepared according to Example 3, a sample was heated to 800°C at a rate of 20°C per minute in air flowing at 50 cubic centimeters per minute and held isothermally for 10 minutes. The weight percentage of remaining solid was attributed to metal oxide and silicon residue with all volatile organic components removed. For the nanocomposites prepared according to Example 3, a sample was heated to 120°C for 2 hours in an oven to drive off residual solvent. This sample was then heated to 800°C at a rate of 20°C per minute in the Thermal Gravimeter Analyzer in air flowing at 50 cubic centimeters per minute and held isothermally for 10 minutes. $t_{50}$, defined as the temperature corresponding to fifty percent weight remaining of the sample, taking the weight measured at 25°C as a reference, was recorded for the purpose of determination of thermal stability. The weight percentage of remaining solid was attributed to metal oxide and silicon residue with all polymeric and volatile organic components removed.

To obtain an estimate of metal oxide content of capped ZnO powder, it is assumed that the residue contains only metal oxide and silicon atoms from the original silane compound. The fraction of metal oxide contained in the powder can be obtained by the following equation:

$$f_{MO} = 1 - f_{organic}(1 + \frac{m_S}{m_{organic}})$$

where $f_{MO}$ = weight fraction of metal oxide, $f_{organic}$ = weight fraction of organic component and is equivalent to weight loss measured by TGA, $m_{S1}$ = relative molecular mass of silicon atom, and $m_{organic}$ = relative molecular mass of organic moiety connected by the Si-C bond, which in the case of phenyltrimethoxysilane consists of $C_6H_5$ is 77.1. In the case of 50 wt% of ZnO, $f_{MO}$= 0.5 and the weight loss measured by TGA is 36.7% or $f_{organic}$= 0.367.

To obtain an estimate of metal oxide content in the polymer nanocomposite, a similar reasoning is followed as before. However, both the polymer and organic moiety in the silane compound contribute to weight loss. Consequently the equation is modified and assumes the following form:

$$f_{MO}^{nanocomposite} = \frac{w}{1 + \frac{A}{1+B}}$$

where $f_{MO}^{nanocomposite}$ = weight fraction of metal oxide in nanocomposite, $w$ = weight fraction of solid content remaining as measured by TGA, $A = \frac{1 - f_{MO}}{f_{MO}}$ and $B = \frac{m_{organic}}{m_S}$ , where $f_{MO}$, $m_{S1}$ and $m_{organic}$ have the same meanings as before. In the case of using 50% wt of phenyltrimethoxysilane-capped ZnO to obtain 4% wt ZnO in the nanocomposite, $f_{MO}= 0.5$, $f_{MO}^{nanocomposite} = 0.04$ and the weight of solid content remaining as measured by TGA is 5% or w = 0.05.

**Test Procedure 3: Determination of Haze Level of Nanocomposites.**

Haze is the percentage of transmitted light, which when passing through a specimen, deviates from the incident beam by forward scattering, the total amount of light that deviates from the incident beam is termed the diffuse transmission. Lower haze values imply greater transparency. It is defined as

$$\%Haze = \frac{T_{diffuse}}{T_{total}} \times 100$$

where T = % transmission.

Haze may be caused by particles or voids in the polymer matrix or imperfect surface of the polymer. It is an effective measure of optical quality of a nanocomposite and may be used as an indicator of the degree of nanoparticle dispersion in the polymer. Lower haze implies better dispersion of nanoparticles. The haze level was determined using a Nippon Denshoku Hazemeter NDH 2000 using a standard CIE D65 illuminant (Colorimetry, 3rd Edition, Publication CIE 15:2004). The use of a standard illuminant gives a measure of haze closer to what is observed visually by the human eye. Standard illuminant D65 covers a spectrum close to natural daylight. This is more exact than measuring transmittance at a X certain wavelength as slight agglomeration of nanoparticles may show little light scattering at longer wavelengths, thereby giving a lower haze value than expected, whereas a broad spectrum will reveal scattering effects for both short and long wavelengths. A nanocomposite film was prepared according to one of the procedures in the examples. The nanocomposite film was in the shape of a disc with a diameter of 4 centimeters; alternatively a piece of film measuring 3 centimeters by 3 centimeters was cut out of a large film, and then the thickness was measured by a micrometer gauge. Care must be taken to ensure the surface of the film was not damaged by scratches or cracks, which may increase the haze level. The film sample was set onto the sample holder and analyzed, the film was then flipped over and analyzed again. The average of two readings was taken to be the final haze level of the film.

**Test Procedure 4: Determination of UV-visible Transmission of Nanocomposites.**

UV absorption is measured by a UV-visible spectrophotometer. The ability of a film to protect a substrate from UV light depends both on the range of wavelength and the amount of UV light absorbed. The amount of UV light absorbed is determined by the amount of UV absorbing agent and the thickness of the film. The range of the wavelength is determined by the size of ZnO nanoparticles, the larger the particle size the broader the absorption range. The effective UV cut-off wavelength can be determined from the UV-visible absorption curve by extending a straight line from the linear slope of the curve; the cut-off wavelength is read off the point where the line intersects the abscissa. A nanocomposite film can absorb UV fully beyond the effective cut-off wavelength even though it exhibits partial absorption if its thickness is increased. A nanocomposite film was prepared according to one of the procedures in the examples. A nanocomposite film measuring 3 centimeters by 3 centimeters was cut out of a large film and the thickness was measured by a micrometer gauge. Care must be taken to ensure the surface of the film was not damaged by scratches or cracks, which may increase light scattering and affect transmission readings. Ultraviolet-visible light transmission of the film was measured using a Hitachi Spectrophotometer U-3310. The UV-visible spectrum was recorded in percent transmission (%T).

**Properties and Characteristics of Nanocomposites**

The thermal stabilities of nanocomposites that were prepared in Examples 1 and 2 were determined. The TGA curves depicted in FIGURES 4 and 5 were obtained and the results that were read off the curves are shown in Table 1. Table 1 illustrates that $t_{50}$ increases in the presence of ZnO and an improvement of at least 14°C in thermal stability is observed in both PMMA and PSt.

TABLE 1

| Sample | Polymer | Capping Agent | Temperature, $t_{50}$ at 50% weight loss (°C) | % Weight remaining at 700°C |
|--------|---------|---------------|--------------------------------------------|----------------------------|
| BM00 | PMMA | - | 310 | 0.37 |
| BM01 | PMMA | Benzyl Mercaptan | 388 | 4.48 |
| TM00 | PSt | - | 390 | 0.80 |
| TM01 | PSt | p-(Trimethylsilyl) phenylmethanethiol | 404 | 4.11 |

The thermal stabilities of nanocomposites that were prepared according to Example 3 are determined. The TGA curves depicted in FIGURE 6 were obtained and the results that were read off the curves are shown in Table 2. Table 2 illustrates that $t_{50}$ increases in the presence of ZnO and an improvement of at least 17°C in thermal stability is observed in PMMA.

TABLE 2

| Sample | Polymer | Capping Agent | Temperature, $t_{50}$ at 50% weight loss (°C) | % Weight remaining at 700°C | ZnO% weight |
|--------|---------|---------------|---------------------------------------------|----------------------------|-------------|
| PTMS00 | PMMA | - | 365 | 0.44 | 0 |
| PTMS01 | PMMA | Phenyltrimethoxysilane | 382 | 1.45 | 1.35 |
| PTMS02 | PMMA | Phenyltrimethoxysilane | 392 | 6.83 | 6.31 |

The haze level and UV absorption properties of nanocomposites that were prepared in Examples 1 and 2 were determined. The UV absorption spectra depicted in FIGURES 7 and 8 were obtained and the results that were read off the spectra are shown in Table 3. Table 3 illustrates that haze levels can be maintained below 3% while UV absorption is extended to 355 nm in the presence ofZnO. Note that the haze level of virgin polymer can be higher than that of the nanocomposite due to the surface quality of the test samples.

TABLE 3

| Sample | Polymer | Haze Level (%) | Effective UV cut-off wavelength (nm) | Thickness (mm) |
|--------|---------|----------------|--------------------------------------|----------------|
| BM00 | PMMA | 1.8 | 270 | 0.210 |
| BM01 | PMMA | 1.57 | 355 | 0.110 |
| TM00 | PSt | 1.62 | 270 | 0.250 |
| TM01 | PSt | 2.88 | 325 | 0.020 |

The haze level and UV absorption properties of nanocomposite that were prepared in Example 3 were determined. The UV absorption spectra depicted in FIGURE 9 were obtained and the results that were read off the spectra are shown in Table 4. Table 4 illustrates that haze levels can be maintained below 3% while UV absorption is extended to 350 nm in the presence of ZnO.

TABLE 4

| Sample | Polymer | Haze Level (%) | Effective UV cut-off wavelength (nm) | Thickness (mm) |
|--------|---------|----------------|--------------------------------------|----------------|
| PTMS00 | PMMA | 0.86 | 280 | 0.213 |
| PTMS01 | PMMA | 0.89 | 340 | 0.244 |
| PTMS02 | PMMA | 1.26 | 350 | 0.248 |

## Claims

1. A nanocomposite comprising:

nanoparticles of zinc oxide covered by a capping agent and a polymer;
wherein the nanocomposite exhibits the following:

a) a haze level being no more than 5% in the measurement conditions of 100 microns thickness, wherein the haze level is determined using a Nippon Denshoku Hazemeter NDH 2000 with a standard CIE D65 illuminant;
b) an effective UV cut-off wavelength of 380 nm or less, wherein the effective UV cut-off wavelength is determined by measuring the ultraviolet-visible light transmission of a film using a Hitachi Spectrophotometer U-3310, whereby the UV-visible spectrum is recorded in percent transmission, the effective UV cut-off wavelength is determined from the UV-visible absorption curve by extending a straight line from the linear slope of the curve and reading off the cut-off wavelength as the point where the line intersects the abscissa; and
c) the temperature to reduce the nanocomposite to 50% of its original weight, $t_{50}$, being at least 10°C higher compared to the same virgin polymer without ZnO nanoparticles included, wherein the measurement is conducted by heating the sample to 120°C for 2 hours in an oven, then heating the sample to 800°C at a rate of 20°C/min in a Shimadzu TGA-50 Thermal Gravimeter Analyzer in air flowing at 50 cm$^3$/min and holding isothermally for 10 min, wherein the original weight is the weight measured at 25°C;

wherein the nanoparticles are surface treated with a thiol compound, serving the role of capping agent(s), having an aromatic group of the structure $HS-R_1-AR-R_2$ or $HS-AR-R_2$, whereby $R_1$ is selected from the group consisting of cycloalkylene, cycloalkenylene, branched or unbranched alkylene, a branched or unbranched alkenylene, a branched or unbranched alkynylene, a branched or unbranched heteroalkylene, a branched or unbranched heteroalkenylene, a branched or unbranched heteroalkynylene; and $R_2$ is selected from the group consisting of sulfonate, phosphonate, halogen, hydrogen, epoxy, allyl, amines, amides, aryl, heteroaryl, cycloalkyl, cycloalkenyl, heterocycloalkyl ester, a branched or unbranched alkyl, a branched or unbranched alkenyl, a branched or unbranched alkynyl, a branched or unbranched heteroalkyl, a branched or unbranched heteroalkenyl, a branched or unbranched heteroalkynyl; and AR is an aromatic group selected from the group consisting of arylene, cycloarylene, heteroarylene or heterocycloarylene; the abovementioned thiol compound may be used in combination with other types of thiol compounds or non-thiolic capping agents;

and wherein "nanocomposite" refers to a composite material of polymer and particles, which has at least one dimension smaller than 100 nanometers and "nanoparticle" refers to a particle, which has at least one dimension smaller than 100 nanometers.

2. The nanocomposite according to Claim 1, wherein the polymer matrix is selected from the group consisting of thermoplastics comprising polyester, polycarbonate, polyolefin, polyamide, polyurethane, polyacetal, polyvinyl acetal, polyvinyl ketal, vinyl polymer or copolymer comprising vinyl monomer selected from (meth)acrylic ester, aromatic vinyl, vinyl cyanide, vinyl halide, vinylidene halide and combinations thereof.

3. The nanocomposite according to Claim 1, wherein the polymer matrix is selected from the group consisting of thermoplastics comprising polyalkylene terephthalate, polycarbonate of bisphenol compound, vinyl polymer or copolymer comprising vinyl monomer selected from methyl methacrylate, styrene and acrylonitrile.

4. The nanocomposite according to Claim 1, wherein the polymer matrix is selected from the group consisting of thermoplastics comprising poly(meth)acrylates and polystyrene, or copolymer comprising vinyl monomer selected from methyl methacrylate, styrene and acrylonitrile.

5. The nanocomposite according to Claim 1, wherein the nanoparticles comprise zinc oxide, or a mixture of inorganic nanoparticles of metal oxides, semiconductors or metals and zinc oxide.

6. A coated article comprising the nanocomposite according to any one of Claims 1 to 5.

7. A method for making the nanocomposite according to any one of Claims 1 to 5, comprising the steps of:

1) treating nanoparticles with a capping agent;
2) preparing a solution of the nanoparticles using a nitrogen-containing solvent including an amine, an amide or a combination thereof;
3) mixing the solution of the nanoparticles and a polymer; and
4) drying the mixture.

8. The method of Claim 7, wherein the nitrogen-containing solvent is selected from the group consisting of N,N-dimethylformamide, pyridine and combinations thereof.

**Patentansprüche**

1. Ein Nanokomposit, umfassend:

Nanopartikel aus Zinkoxid, überzogen mit einem Verkappungsmittel und einem Polymer;
wobei der Nanokomposit folgendes aufweist:

a) einen Trübungsgrad von nicht mehr als 5% bei Messbedingungen von 100 Mikrometern Dicke, wobei der Trübungsgrad unter Verwendung eines Nippon Denshoku Hazemeters NDH 2000 mit einem CIE D65 Standardleuchtkörper bestimmt wird;
b) eine wirksame UV-Grenzwellenlänge von 380 nm oder weniger, wobei die wirksame UV-Grenzwellenlänge durch Messung der ultraviolett-sichtbaren Licht-Transmission einer Folie unter Verwendung eines Hitachi Spektrophotometers U-3310 bestimmt wird, wobei das UV-VIS Spektrum in prozentualer Transmission aufgenommen wird, die wirksame UV-Grenzwellenlänge bestimmt wird anhand der UV-VIS Absorptionskurve, durch Verlängern einer Geraden bei der linearen Steigung der Kurve und Ablesen der Grenzwellenlänge an dem Punkt, wo die Linie die Abszisse schneidet; und
c) die Temperatur, um den Nanokomposit auf 50% seines ursprünglichen Gewichts zu reduzieren, $t_{50}$, um mindestens 10°C höher ist, verglichen mit demselben Neupolymer ohne enthaltene ZnO Nanopartikel, wobei die Messung durchgeführt wird durch Erwärmen der Probe in einem Ofen auf 120°C für 2 Stunden, danach Erwärmen der Probe auf 800°C bei einer Geschwindigkeit von 20°C/min in einem Shimadzu TGA-50 Thermal Gravimeter Analyzer unter Luft, die bei 50 cm$^3$/min ausströmt, und isothermalem Halten für 10 min, wobei das ursprüngliche Gewicht das bei 25°C gemessene Gewicht ist;

wobei die Nanopartikel mit einer Thiol-Verbindung oberflächenbehandelt sind, welche die Funktion des/der Verkappungsmittel einnimmt, welche einen aromatischen Rest mit der Struktur HS-$R_1$-AR-$R_2$ oder HS-AR-$R_2$ aufweist, wobei $R_1$ aus der Gruppe bestehend aus Cycloalkylen, Cycloalkenylen, verzweigtem oder unverzweigtem Alkylen, einem verzweigten oder unverzweigten Alkenylen, einem verzweigten oder unverzweigten Alkinylen, einem verzweigten oder unverzweigten Heteroalkylen, einem verzweigten oder unverzweigten Heteroalkenylen, einem verzweigten oder unverzweigten Heteroalkinylen ausgewählt ist; und $R_2$ aus der Gruppe bestehend aus Sulfonat, Phosphonat, Halogen, Wasserstoff, Epoxy, Allyl, Aminen, Amiden, Aryl, Heteroaryl, Cycloalkyl, Cycloalkenyl, Heterocycloalkylester, einem verzweigten oder unverzweigten Alkyl, einem verzweigten oder unverzweigten Alkenyl, einem verzweigten oder unverzweigten Alkinyl, einem verzweigten oder unverzweigten Heteroalkyl, einem verzweigten oder unverzweigten Heteroalkenyl, einem verzweigten oder unverzweigten Heteroalkinyl ausgewählt ist; und AR ein aromatischer Rest, ausgewählt aus der Gruppe bestehend aus Arylen, Cycloarylen, Heteroarylen oder Heterocycloarylen, ist; die oben genannte Thiol-Verbindung kann in Verbindung mit anderen Arten von Thiol-Verbindungen oder nicht thiolischen Verkappungsmitteln verwendet werden;

und wobei „Nanokomposit" sich auf ein Kompositmaterial von Polymer und Partikel bezieht, welches mindestens eine Abmessung kleiner als 100 Nanometer aufweist, und "Nanopartikel" sich auf ein Partikel bezieht, welches mindestens eine Abmessung kleiner als 100 Nanometer aufweist.

2. Der Nanokomposit gemäß Anspruch 1, wobei die Polymermatrix aus der Gruppe bestehend aus Thermoplasten, umfassend Polyester, Polycarbonat, Polyolefin, Polyamid, Polyurethan, Polyacetal, Polyvinylacetal, Polyvinylketal, Vinylpolymer oder Copolymer, umfassend Vinylmonomer, ausgewählt aus (Meth)acrylester, aromatischem Vinyl, Vinylcyanid, Vinylhalogenid, Vinylidenhalogenid und Kombinationen davon ausgewählt ist.

3. Der Nanokomposit gemäß Anspruch 1, wobei die Polymermatrix aus der Gruppe bestehend aus Thermoplasten, umfassend Polyalkylenterephthalat, Polycarbonat einer Bisphenol-Verbindung, Vinylpolymer oder Copolymer, umfassend Vinylmonomer, ausgewählt aus Methylmethacrylat, Styrol und Acrylnitril ausgewählt ist.

4. Der Nanokomposit gemäß Anspruch 1, wobei die Polymermatrix aus der Gruppe bestehend aus Thermoplasten, umfassend Poly(meth)acrylate und Polystyrol, oder Copolymer, umfassend Vinylmonomer, ausgewählt aus Methylmethacrylat, Styrol und Acrylnitril, ausgewählt ist.

5. Der Nanokomposit gemäß Anspruch 1, wobei die Nanopartikel Zinkoxid oder ein Gemisch aus anorganischen Nanopartikeln von Metalloxiden, Halbleitern oder Metallen und Zinkoxid umfassen.

6. Ein beschichteter Gegenstand, umfassend den Nanokomposit gemäß einem der Ansprüche 1 bis 5.

7. Ein Verfahren zur Herstellung des Nanokomposits gemäß einem der Ansprüche 1 bis 5, umfassend die Schritte:

1) Behandeln von Nanopartikeln mit einem Verkappungsmittel;
2) Herstellen einer Lösung der Nanopartikel unter Verwendung eines stickstoffhaltigen Lösungsmittels, enthaltend ein Amin, ein Amid oder eine Kombination davon;
3) Mischen der Lösung der Nanopartikel mit einem Polymer; und
4) Trocknen des Gemisches.

8. Das Verfahren gemäß Anspruch 7, wobei das stickstoffhaltige Lösungsmittel aus der Gruppe bestehend aus N,N-Dimethylformamid, Pyridin und Kombinationen davon ausgewählt ist.

**Revendications**

1. Nanocomposite comprenant :

des nanoparticules d'oxyde de zinc couvertes par un agent de coiffage et un polymère ;
dans lequel le nanocomposite présente les propriétés suivantes :

a) un niveau de voile qui est non supérieur à 5 % dans les conditions de mesure de 100 microns d'épaisseur, dans lequel le niveau de voile est déterminé au moyen d'un dispositif de mesure de voile NDH 2000 Nippon Denshoku avec un illuminant de la norme CIE D65 ;

b) une longueur d'onde de coupure UV efficace de 380 nm ou moins, dans lequel la longueur d'onde de coupure UV efficace est déterminée en mesurant la transmission de la lumière ultraviolette-visible d'un film au moyen d'un spectrophotomètre U-3310 Hitachi, moyennant quoi le spectre UV-visible est enregistré en transmission en pour cent, la longueur d'onde de coupure UV efficace est déterminée à partir de la courbe d'absorption UV-visible en prolongeant une droite à partir de la pente linéaire de la courbe et en relevant la longueur d'onde de coupure comme le point où la droite coupe l'axe des abscisses ; et

c) la température pour réduire le nanocomposite à 50 % de sa masse d'origine, $t_{50}$, étant d'au moins 10°C plus élevée que le même polymère vierge sans inclusion de nanoparticules de ZnO, dans lequel la mesure est conduite en chauffant l'échantillon à 120°C pendant 2 heures dans un four, puis en chauffant l'échantillon à 800°C à une vitesse de 20°C/min dans un analyseur gravimétrique thermique TGA-50 Shimadzu dans de l'air circulant à 50 cm$^3$/min et en maintenant une isothermie pendant 10 min, dans lequel la masse d'origine est la masse mesurée à 25°C ;

dans lequel les nanoparticules sont traitées en surface avec un composé thiol, servant d'agent(s) de coiffage, ayant un groupe aromatique de structure HS-$R_1$-AR-$R_2$ ou HS-AR-$R_2$, où $R_1$ est choisi dans le groupe constitué par un cycloalkylène, un cycloalcénylène, un alkylène ramifié ou non ramifié, un alcénylène ramifié ou non ramifié, un alcynylène ramifié ou non ramifié, un hétéroalkylène ramifié ou non ramifié, un hétéroalcénylène ramifié ou non ramifié, un hétéroalcynylène ramifié ou non ramifié ; et $R_2$ est choisi dans le groupe constitué par un sulfonate, phosphonate, halogène, hydrogène, époxy, allyle, les amines, amides, un aryle, hétéroaryle, cycloalkyle, cycloalcényle, ester d'hétérocycloalkyle, un alkyle ramifié ou non ramifié, un alcényle ramifié ou non ramifié, un alcynyle ramifié ou non ramifié, un hétéroalkyle ramifié ou non ramifié, un hétéroalcényle ramifié ou non ramifié, un hétéroalcynyle ramifié ou non ramifié ; et AR est un groupe aromatique choisi dans le groupe constitué par un arylène, cycloarylène, hétéroarylène ou hétérocycloarylène ; le composé thiol susmentionné peut être utilisé en combinaison avec d'autres types de composés thiol ou des agents de coiffage non thioliques ;

et dans lequel "nanocomposite" se réfère à un matériau composite de polymère et particules, qui a au moins une dimension plus petite que 100 nanomètres et "nanoparticule" se réfère à une particule, qui a au moins une dimension plus petite que 100 nanomètres.

2. Nanocomposite selon la revendication 1, dans lequel la matrice de polymère est choisie dans le groupe constitué des thermoplastiques comprenant le poly(ester), le poly(carbonate), une poly-(oléfine), le poly(amide), le poly(uréthane), le poly(acétal), le poly(vinyl acétal), le poly-(vinyl cétal), un polymère ou copolymère de vinyle comprenant un monomère de vinyle choisi parmi un ester (méth)acrylique, un vinyle aromatique, le cyanure de vinyle, un halogénure de vinyle, un halogénure de vinylidène et leurs combinaisons.

3. Nanocomposite selon la revendication 1, dans lequel la matrice de polymère est choisie dans le groupe constitué des thermoplastiques comprenant un poly(téréphtalate d'alkylène), un poly-(carbonate) de composé bisphénol, un polymère ou copolymère de vinyle comprenant un monomère de vinyle choisi parmi le méthacrylate de méthyle, le styrène et l'acrylonitrile.

4. Nanocomposite selon la revendication 1, dans lequel la matrice de polymère est choisie dans le groupe constitué des thermoplastiques comprenant les poly((méth)acrylates) et le poly(styrène), ou un copolymère comprenant un monomère de vinyle choisi parmi le méthacrylate de méthyle, le styrène et l'acrylonitrile.

5. Nanocomposite selon la revendication 1, dans lequel les nanoparticules comprennent de l'oxyde de zinc, ou un mélange de nanoparticules inorganiques d'oxydes de métal, de semi-conducteurs ou de métaux et d'oxyde de zinc.

6. Article revêtu comprenant le nanocomposite selon l'une quelconque des revendications 1 à 5.

7. Méthode de préparation du nanocomposite selon l'une quelconque des revendications 1 à 5, comprenant les étapes consistant à :

1) traiter des nanoparticules avec un agent de coiffage ;
2) préparer une solution de nanoparticules au moyen d'un solvant contenant de l'azote comprenant une amine, un amide ou l'une de leurs combinaisons ;
3) mélanger la solution de nanoparticules et d'un polymère ; et

4) sécher le mélange.

8. Méthode selon la revendication 7, dans laquelle le solvant contenant de l'azote est choisi dans le groupe constitué par le N,N-diméthylformamide, la pyridine et leurs combinaisons.

# Fig. 1

# Fig. 2

# Fig. 3

# Fig. 4

# Fig. 5

# Fig. 6

# Fig. 7

# Fig. 8

# Fig. 9

# Fig. 10

**EP 1 931 724 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 72334405 P
- US 60830433 P
- US 6586096 B, Border
- US 6432526 B, Arney
- US 2005260122 A
- US 20050260122 A

**Non-patent literature cited in the description**

- **Pearton et al.** Recent progress in processing and properties of ZnO. *Prog. Mater. Sci.,* 2005, vol. 50, 293-340
- **Liufu et al.** Thermal analysis and degradation mechanism of polyacrylate/ZnO nanocomposites. *Polym. Degrad. Stab.,* 2005, vol. 87, 103-110
- **Cho et al.** Effects of ZnO Nano Particles on Thermal Stabilization of Polymers. *Polym. Eng. Sci.,* 2004, vol. 44, 1702-1706
- **Li et al.** The friction and wear characteristics of nanometer ZnO filled polytetrafluoroethylene. *Wear,* 2002, vol. 249, 877-882
- **Nussbaumer et al.** Synthesis and characterization of surface-modified rutile nanoparticles and transparent polymer composites thereof. *J. Nanoparticle Res.,* 2002, vol. 4, 319-323
- **Abdullah et al.** Generating Blue and Red Luminescence from ZnO/Poly(ethylene glycol) Nanocomposite Prepared Using an In-Situ Method. *Adv. Func. Mater.,* 2003, vol. 13, 800-804
- **Jeon et al.** Synthesis of ZnO nanoparticles embedded in a polymeric matrix; effect of curing temperature. *Materials Science Forum,* 2004, vol. 449-452, 1145-1148
- **Mulligan et al.** Synthesis and Characterization of ZnO Nanostructures Templated Using Diblock Copolymers. *J. Appl. Polym. Sci.,* 2003, vol. 89, 1058-1061
- **Yoo et al.** Self-assembled arrays of zinc oxide nanoparticles from monolayer films of diblock copolymer micelles. *Chem. Commun.,* 2004, (24), 2850-2851

- **Xiong et al.** Preparation and Characterization of Poly(styrene butylacrylate) Latex/Nano-ZnO Nanocomposites. *J. Appl. Polym. Sci.,* 2003, vol. 90, 1923-1931
- **Chen et al.** ZnO/PMMA Thin Film nanocomposites for Optical Coatings. *Proc. SPIE,* 2003, vol. 5222, 158-162
- **Zhou et al.** Dispersion and UV-VIS Properties of Nanoparticles in Coatings. *J. Dispersion Sci. Tech.,* 2004, vol. 25, 417-433
- **Khrenov et al.** Surface Functionalized ZnO Particles Designed for the Use in Transparent Nanocomposites. *Macromol. Chem. Phys.,* 2005, vol. 206, 95-101
- **Hung et al.** Effect of surface stabilization of nanoparticles on luminescent characteristics in ZnO poly(hydroxyethyl methacrylate) nanohybrid films. *J. Mater. Chem.,* 2005, vol. 15, 267-274
- **Guo et al.** synthesis and Characterization of Poly(vinylpyrrolidone)-Modified Zinc Oxide Nanoparticles. *Chem. Mater.,* 2005, vol. 12, 2268-2274
- **Koch et al.** *Chem. Phys. Lett.,* 1985, vol. 122 (5), 507-510
- **Bahnemann et al.** *Phys. Chem.,* 1987, vol. 91, 3789-3798
- **Spanhel et al.** *J. Am. Chem. Soc.,* 1991, vol. 113, 2826-2833
- **Bahnemann et al.** *J. Phys. Chem.,* 1987, vol. 91, 3789-3798
- **Bahnemann et al.** *J. Phys. Chem.,* 1987, vol. 91, 3789
- Colorimetry. 2004, 15

24